# EUROPEAN PATENT SPECIFICATION

(11) **EP 3 389 053 B1**
(45) Date of publication and mention of the grant of the patent: **29.12.2021**
(21) Application number: 16873438.2
(22) Date of filing: 23.05.2016
(51) Int. Cl.: G21C 7/10, G21C 21/02, G21C 7/103, G21C 7/24

(54) **METHOD OF ASSEMBLING A NUCLEAR REACTOR ABSORBER ELEMENT**
VERFAHREN ZUR MONTAGE EINES KERNREAKTORABSORBERELEMENTS
PROCÉDÉ D'ASSEMBLAGE D'ÉLÉMENT ABSORBANT DANS UN RÉACTEUR NUCLÉAIRE

(30) Priority: 09.12.2015 RU 2015152579
(43) Date of publication of application: 17.10.2018
(73) Proprietor: Publichnoe Aktsionernoe Obschestvo "Mashinostroitel'niy Zavod", Moskovskaya obl. 144001 (RU)
(72) Inventor: AKSENOV, Pyotr Mikhaylovich, Moskovskaya oblast g. Elektrostal' 144010 (RU); DUBOVITSKIY, Andrey Vladimirovich, Moskovskaya oblast g. Elektrostal' 144009 (RU); LUZAN, Yuriy Vasil'yevich, Moskovskaya oblast g. Elektrostal' 144004 (RU); KIRILIN, Artemiy Vyacheslavovich, Moskovskaya oblast g. Elektrostal' 144009 (RU)
(74) Representative: Friese Goeden Patentanwälte PartGmbB
(86) International application number: PCT/RU2016/000305
(87) International publication number: WO 2017/099621

(56) References cited:
- GB-A- 934 413
- RU-C1- 2 453 004
- RU-C1- 2 453 004
- RU-C2- 2 166 805
- RU-C2- 2 300 153
- US-A- 4 699 756
- US-A1- 2006 034 412

## Description

Invention relates to nuclear engineering, in particular, to a method of assembling absorber elements (AE) of pressurized water reactor control and protection systems, e.g., VVER-1000, AES-2006 and others.

Design of pressurized water reactor VVER-1000 FA (see Kirillov P.L. Et al. Thermohydraulic calculations reference guide (nuclear reactors, heat exchangers, steam generators). M.: Energoatomizdat,1990., fig.P8.3., p.318) comprises fuel elements and guiding channels for absorber element (AE), located by a regular triangle grid.

Normally, AE consists of absorbing material, can, top nozzle, adulterant, tale part for fastening AE in drive, and bottom nozzle, made in the form of cylinder with cone shaped end.

For the moment, there is a number of AE designs, comprising various absorbing materials, either powdered and in the form of sintered pellets. Can and nozzles of AE are made of the same material, e.g. 42XHM alloy.

Absorbing materials, allocated inside the can are typically consist of two parts: upper made from boron carbide (B₄C), having (n,α) reaction with neutrons, and bottom which is first inserted into the reactor core, having (n, γ) reaction with neutrons.

State-of-art design of the VVER-1000 AE has lower part of absorber, made of vibropac dysprosium titanate (Dy₂O₃TiO₂) (see V.K.Rezepov et al. VVER-1000 reactors for nuclear power plants, FGUP OKB "GIDROPRESS". M.: Akademkniga, 2004, p. 272-276).

Choosing of dysprosium titanate as material for bottom part causes stabilizing the primary parameters of AE since dysprosium titanate, in the first instance, insignificantly changes efficiency of absorbing neutrons during radiation bombardment, and in the second instance, neutrons absorption efficiency change law has expressed linear character, which allows to perform more accurate calculation of AE efficiency by campaign.

Quietly reliable screening of boron carbide from swelling is provided at absorber's column part length, taken by dysprosium titanate, not less than 2% of neutrons absorber's column total length.

Additionally, presence of dysprosium titanate in a bottom part of AE significantly increases total mass, since dysprosium titanate density is more than fourth higher of boron carbide density. AE mass increase rises its administration into the core in case of safety trip, which improves safety of reactor.

Prior art method of such AEs assembly comprises steps of tube-shaped can preparation and its pressurization from the bottom edge by the means of bottom nozzle via argon-arc welding (AAW).

Then, the can loading is performed with absorbing materials in the form of powder with vibro flotation and/or pellets, fastening of absorber by plug and nickel grid from axial displacement.

After loading of absorbing material, AE is vacuumized and filled with inert gas under pressure. An adulterant is inserted into the internal cavity of AE. It is coupled to upper nozzle and then upper nozzle is connected to a can by means of AAW.

Wherein reliability and functional ability of AE depends on leakproofness integrity of welding connections, which directly concerned with accuracy of manufacturing of seal housings (nozzles and edge parts of can) and their preparation as well as with skill of operator performing AAW.

Significant disadvantage of prior art AE assembly method is quite long process of AAW taking several minutes for each welding connection.

In this period the pressure inside AE decreases a lot, as well as penetration of air is possible inside the can which adversely impacts on reliability and operation capacity of AE components.

The same negative results could be also caused by probable non-return displacement of nickel grid during transportation and installation and AE leakproofness inspection.

It is proposed to perform pressurization of AE by the means of butt resistance welding (BRW) of upper nozzle and can which reduces to a minimum mentioned disadvantages of prior art AE assembly method.

This welded connection is higher than core at area of thermal control protective tubes, so there is no need in reactor testing for grounding of its durability.

At such method of pressurization, the welding time is significantly reduced, wherein adulterant is excluded from internal cavity of a can and is replaced to upper nozzle for exclusion of welding current bridging, which leads to decrease of can length and, in turn, causes to growing strength and rigidity of AE.

The object of invention is development of AE assembly method, leading to increasing of its reliability and improving of operating capability while saving AE efficiency.

This object is resolved by that pressurization of AE during assembly is performed by welding of upper nozzle with can with BRW and use of spring plunger, which provides claimed effect.

For the now BRW is widely used in production of nuclear fuel elements, wherein vacuuming, filling with inert gas and welding processes are fully automated.

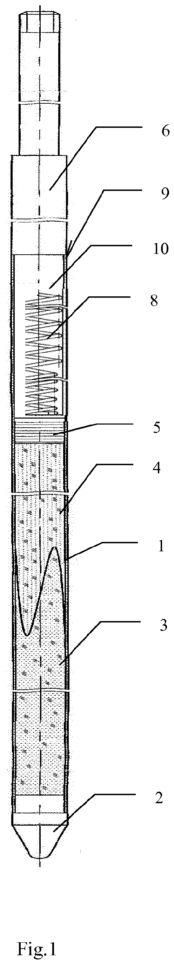

General layout of AE able to implement offered proposed method is represented at Fig. 1.2.

Can 1 and bottom nozzle 2 are prepared for AAW.

Initially, can 1 is welded with bottom nozzle 2 by means of AAW.

Then, dysprosium titanate powder 3 is added and compacted by vibration to a can 1 at the amount not less than 2% of overall length of absorbing material. After that boron carbide powder 4 is added and plug 5 is installed or pellets 7 are loaded from boron carbide.

Fastening of absorber is performed by spring plunger 8 (see patent RU N°2389088, 2010), installed in compensative volume 10 AE and resting upon upper pellet 7 or filler 5 at powdery condition of absorbing material, which is most reliably holds position of absorbing material during transportation and installation and leakproofness inspection.

Then, vacuuming and filling of internal cavity of AE by inert gas is performed. In the same time, AE is pressurized by upper nozzle 6, comprising the adulterant using BRW 9 with can 1.

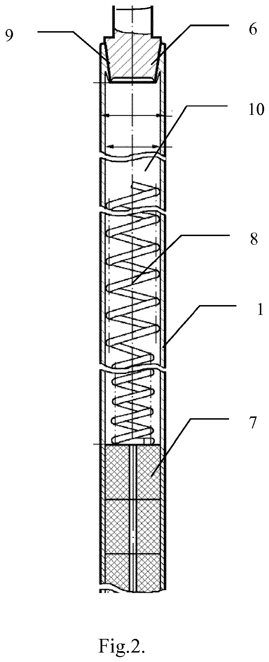

General layout of AE, wherein boron carbide in powdered condition and fastened in can 1 by a spring plunger 8 and filler 5 is represented on Fig.2.

General view of BRW node 9 in AE, wherein boron carbide is loaded in form of sintered pellets 7, fastened in can 1 by means of spring plunger 8 is represented on Fig.2.

Invention is explained by following drawings.

On Fig.1 - general layout of AE with absorbing material in form of powder.

On Fig.2 - general layout of AE with boron carbide in form of pellets.

## Claims

1. Method of assembling a nuclear reactor absorbing element, including preparation of a casing (1) in the form of a tube, its sealing by argon-arc welding from one end by means of a bottom cap (2) having a conical shape, loading the casing (1) with absorbing material in the form of pellets (7) or powder (4), fastening of the absorbing material from axial displacement, sealing of the casing (1) at the other end by means of an upper cap (6) comprising ballast, wherein the fastening the absorbing material from axial displacement is performed by means of a spring plunger (8), installed in a compensative volume (10), **characterised in that** the sealing of the absorbing element with the upper cap (6) is effected by means of butt resistance welding, wherein during the last-mentioned operation the internal cavity of the casing (1) is vacuumed and filled with an inert gas.

2. Method of assembling a nuclear reactor absorbing element according to claim 1, **characterized in that** boron carbide (B₄C) is loaded to the upper part of the column of absorbing material, and dysprosium titanate (Dy₂O₃TiO₂) is loaded to the lower part.

3. Method of assembling a nuclear reactor absorbing element according to any of the preceding claims, **characterized in that** boron carbide is loaded in form of pellets (7) as absorbing material.

4. Method of assembling a nuclear reactor absorbing element according to any of the preceding claims, **characterized in that** the sealing of the casing (1) is performed by means of caps (2, 6) made from same material as the casing (1).

5. Method of assembling a nuclear reactor absorbing element according to any of the preceding claims, **characterized in that** the material of the casing and of the caps (2, 6) is 42XHM alloy.

## Patentansprüche

1. Verfahren zum Zusammenbauen eines Absorptionselements für einen Kernreaktor, umfassend die Herstellung eines Gehäuses (1) in Form eines Rohrs, dessen Abdichtung durch Argonbogenschweißen von einem Ende aus mittels einer unteren Kappe (2), die eine konische Form aufweist, das Beladen des Gehäuses (1) mit Absorptionsmaterial in Form von Pellets (7) oder Pulver (4), das Befestigen des absorbierenden Materials gegen axiale Verlagerung, das Abdichten des Gehäuses (1) am anderen Ende mittels einer oberen Kappe (6), die Ballast umfasst, wobei das Befestigen des absorbierenden Materials gegen axiale Verlagerung mittels eines Federbolzens (8) erfolgt, der in einem Ausgleichsvolumen (10) installiert ist, **dadurch gekennzeichnet, dass** das Abdichten des Absorptionselements mit der oberen Kappe (6) mittels Widerstandsstumpfschweißen erfolgt, wobei während des letztgenannten Vorgangs der innere Hohlraum des Gehäuses (1) abgesaugt und mit einem Inertgas gefüllt wird.

2. Verfahren zum Zusammenbauen eines Absorptionselements für einen Kernreaktor nach Anspruch 1, **dadurch gekennzeichnet, dass** der obere Teil der Säule aus absorbierendem Material mit Borkarbid (B₄C) geladen wird und der untere Teil mit Dysprosiumtitanat (Dy₂O₃TiO₂) geladen wird.

3. Verfahren zum Zusammenbauen eines Absorptionselements für einen Kernreaktor nach einem der vorhergehenden Ansprüche, **dadurch gekennzeichnet, dass** Borkarbid in Form von Pellets (7) als Absorptionsmaterial geladen wird.

4. Verfahren zum Zusammenbauen eines Absorptionselements für einen Kernreaktor nach einem der vorhergehenden Ansprüche, **dadurch gekennzeichnet, dass** das Abdichten des Gehäuses (1) mit Hilfe von Kappen (2, 6) erfolgt, die aus demselben Material wie das Gehäuse (1) gefertigt sind.

5. Verfahren zum Zusammenbauen eines Absorptionselements für einen Kernreaktor nach einem der vorhergehenden Ansprüche, **dadurch gekennzeichnet, dass** das Material des Gehäuses und der Kappen (2, 6) eine 42XHM-Legierung ist.

## Revendications

1. Procédé d'assemblage d'élément absorbant de réacteur nucléaire, comprenant les étapes consistant à préparer un boîtier (1) en forme de tube, à l'étancher par soudage à l'arc-argon au niveau d'une extrémité au moyen d'un bouchon inférieur (2) ayant une forme conique, à charger le boîtier (1) avec un matériau absorbant sous forme de pastilles (7) ou de poudre (4), à fixer le matériau absorbant par rapport à un déplacement axial, à étancher le boîtier (1) au niveau de l'autre extrémité au moyen d'un bouchon supérieur (6) comprenant un lest, dans lequel l'étape consistant à fixer le matériau absorbant par rapport à un déplacement axial est effectuée au moyen d'un piston à ressort (8), installé dans un volume de compensation (10),
**caractérisé en ce que** l'étanchement de l'élément absorbant avec le bouchon supérieur (6) est effectué au moyen d'un soudage par résistance en bout, dans lequel, pendant l'opération mentionnée en dernier, la cavité interne du boîtier (1) est aspirée sous vide et remplie d'un gaz inerte.

2. Procédé d'assemblage d'élément d'absorbant de réacteur nucléaire selon la revendication 1, **caractérisé en ce que** du carbure de bore (B₄C) est chargé sur la partie supérieure de la colonne de matériau absorbant, et du titanate de dysprosium (Dy₂O₃TiO₂) est chargé sur la partie inférieure.

3. Procédé d'assemblage d'élément absorbant de réacteur nucléaire selon l'une quelconque des revendications précédentes, **caractérisé en ce que** du carbure de bore est chargé sous forme de pastilles (7) à titre de matériau absorbant.

4. Procédé d'assemblage d'élément absorbant de réacteur nucléaire selon l'une quelconque des revendications précédentes, **caractérisé en ce que** l'étanchement du boîtier (1) est effectué au moyen de bouchons (2, 6) faits à partir du même matériau que le boîtier (1).

5. Procédé d'assemblage d'élément absorbant de réacteur nucléaire selon l'une quelconque des revendications précédentes, **caractérisé en ce que** le matériau du boîtier et des bouchons (2, 6) est un alliage 42XHM.
